Europäisches Patentamt

European Patent Office

Office européen des brevets

(19)

(11) Numéro de publication : **0 096 936**
**B1**

(12) **FASCICULE DE BREVET EUROPÉEN**

(45) Date de publication du fascicule du brevet :
26.04.89

(21) Numéro de dépôt : 83200837.9

(22) Date de dépôt : 09.06.83

(51) Int. Cl.⁴ : **H 04 B  3/23**

(54) Procédé destiné à réduire le temps de convergence d'un annuleur d'écho et dispositif utilisé pour mettre en oeuvre ce procédé.

Demande divisionnaire 86202106 déposée le 27.11.86.

(30) Priorité : 14.06.82 FR 8210310

(43) Date de publication de la demande :
28.12.83 Bulletin 83/52

(45) Mention de la délivrance du brevet :
26.04.89 Bulletin 89/17

(84) Etats contractants désignés :
CH DE FR GB IT LI SE

(56) Documents cités :
EP–A– 0 036 696
EP–A– 0 052 362
US–A– 4 047 013
IBM TECHNICAL DISCLOSURE BULLETIN, vol. 21, no. 5, octobre 1978, pages 1916-1918, New York, USA. A. DESBLACHE et al.: "Centering transversal equalizer tap coefficients"
IEEE FIFTH INTERNATIONAL CONFERENCE ON DIGITAL SATELLITE COMMUNICATIONS, 23-26 mars 1981, pages 259-264, Genoa, IT. M. COPPERI et al.: "A new approach for a microprogrammed echo canceller"

(73) Titulaire : TELECOMMUNICATIONS RADIOELECTRIQUES ET TELEPHONIQUES T.R.T.
88, rue Brillat Savarin
F-75013 Paris (FR)

(72) Inventeur : Guidoux, Loic Bernard Yves
SOCIETE CIVILE S.P.I.D. 209 rue de l'Université
F-75007 Paris (FR)

(74) Mandataire : Charpail, François et al
Société Civile S.P.I.D. 209, rue de l'Université
F-75007 Paris (FR)

## Description

La présente invention concerne un procédé destiné à réduire le temps de convergence d'un annuleur d'écho faisant partie d'un système comprenant au moins deux équipements émetteurs-récepteur dont un est dit équipement local et l'autre équipement distant, cet annuleur d'écho qui est connecté dans un équipement émetteur-récepteur entre deux voies unidirectionnelles émission et réception couplées à une voie bidirectionnelle et qui est utilisé pour annuler un signal d'écho se produisant dans la voie réception en réponse à un signal fourni à la voie émission, comprenant un filtre transversal à N coefficients réglables traitant un signal déduit du signal fourni à la voie émission et un circuit de différence pour former un signal de différence entre deux signaux formés respectivement à partir du signal dans la voie réception et du signal de sortie du filtre transversal, ce procédé étant basé :

— sur l'émission dans l'équipement local d'un signal de données d'apprentissage D(n) formé de données émises à des instants nT, se reproduisant périodiquement après une durée LT au moins égale à NT et répondant à la propriété P1 :

$$\sum_{n=0}^{L-1} d(n).d^*[(n-i)\text{modulo }L] = 0 \quad \text{pour } i \neq 0 \text{ et } 1 \leqslant i \leqslant N-1$$

ou à la propriété P2 :

$$\sum_{n=0}^{L-1} d(n).d^*[(n-i)\text{modulo }L] = -1 \quad \text{pour } i \neq 0 \text{ et } 1 \leqslant i \leqslant N-1$$

d et d* étant respectivement la valeur d'une donnée du signal D(n) et sa valeur conjuguée.

— sur le calcul des coefficients du filtre transversal est effectué après l'instant d'apparition du signal d'écho engendré par ledit signal d'apprentissage, selon l'expression :

$$\vec{C} = \vec{C_0} + \frac{1}{L\sigma^2} \sum_{n=0}^{L-1} e(n).\vec{D^*}(n)$$

$\vec{C_0}$ et $\vec{C}$ étant respectivement les vecteurs des N coefficients du filtre transversal au début et à la fin de la durée de calcul des coefficients,
e(n) étant le signal de différence,
$\vec{D^*}$ étant le vecteur des valeurs conjuguées des N données emmagasinées dans le filtre transversal,
$\sigma^2$ étant un terme constant, représentatif de la puissance de chaque donnée émise.

Les annuleurs d'écho sont utilisés par exemple dans les modems de transmission de données dont les voies émission et réception formant ensemble un accès quatre fils sont souvent couplées par un circuit de couplage, de façon que chaque modem ait avec l'extérieur un accès deux fils. On sait que lorsqu'on établit une liaison entre deux modems par leurs accès deux fils, il peut se produire dans la voie réception de chaque modem un signal intempestif, appelé signal d'écho, qui est une fraction du signal émis dans la voie émission du même modem et qui est dû à des imperfections du circuit de couplage et/ou à des réflexions dans la liaison. Un annuleur d'écho a pour but d'annuler automatiquement ce signal d'écho, afin de permettre une transmission en duplex simultané, entre deux modems reliés par leurs accès deux fils.

Dans un annuleur d'écho, le filtre transversal a ses coefficients qui sont commandés pour minimiser la valeur quadratique moyenne du signal de différence ou signal d'erreur apparaissant à la sortie du circuit de différence. Lorsque l'annuleur d'écho a convergé, les coefficients du filtre transversal sont pratiquement égaux à des échantillons de la réponse impulsionnelle du chemin d'écho et le filtre transversal fournit un signal d'écho pratiquement égal au signal d'écho aux instants d'échantillonnage.

Pour obtenir une convergence rapide on utilise un signal de données d'apprentissage de type particulier, soit pour répondre à la propriété P1 comme cela est indiqué dans l'article : « Centering transversal Equalizer Tap Coefficients » de A. Desblache et P. Thirion, paru dans IBM Technical Disclosure Bulletin-vol. 21, n° 5, octobre 1975, soit pour répondre à la propriété P2 ; en ce cas le signal de données d'apprentissage est une des séquences de données connues sous le nom de séquences de longueur maximale, comme cela est décrit dans l'article intitulé « A New Approach for A Microprogrammed Echo Canceller » de M. COPPERI et paru dans IEEE FIFTH INTERNATIONAL CONFERENCE ON DIGITAL SATELLITE COMMUNICATIONS, 23-26 mars 1981, pages 259-264, Genoa, ITALIE.

Ces procédés suggérés par ces articles présentent l'inconvénient qu'ils sont peu performants pour régler les coefficients de l'annuleur d'écho de l'un des équipements alors que l'autre équipement émet des données pour, par exemple régler les coefficients de son propre annuleur d'écho. Ceci impose donc que les coefficients de ces deux annuleurs d'écho soient ajustés tour à tour. Le temps de convergence est finalement doublé.

La présente invention propose un procédé selon la revendication 1 qui diminue dans une large mesure le temps de convergence des annuleurs d'écho compris d'un côté dans un équipement local et d'un autre côté dans un équipement distant.

Pour cela, un tel procédé du genre mentionné dans le préambule est remarquable en ce qu'il est basé en outre sur l'émission quasi simultanée avec le signal de données d'apprentissage D(n) dans l'équipement distant d'un signal de données d'apprentissage G(n), le signal G(n) répondant à la même propriété que le signal D(n), en ce que les signaux D(n) et G(n) répondent en outre à la propriété P1' pour un signal de données répondant à la propriété P1 :

$$\sum_{n=0}^{L-1} d^*[(n-i)modulo\ L].g[(n-i')modulo\ L] = 0$$

ou à la propriété P2' pour un signal de données répondant à la propriété P2 :

$$\sum_{n=0}^{L-1} d^*[(n-i)modulo\ L].g[(n-i')modulo\ L] = -1$$

pour i et i' tels que $0 \leqslant i \leqslant N - 1$, $0 \leqslant i' \leqslant N - 1$

g étant la valeur d'une donnée du signal G(n).

Il est à noter que cette quasi-simultanéité est assurée par les protocoles classiques de mise en relation entre équipement demandeur et équipement appelé. Le fait que l'équipement appelé réponde à l'appel permet de définir un instant où les signaux de données d'apprentissage sont émis.

Une demande divisionnaire EP-A-0 270 706, relative à la présente demande, a été publiée le 15.06.88. Elle concerne un procédé destiné à réduire le temps de convergence d'un annuleur d'écho, pour lequel le signal d'écho présente une dérive en fréquence.

La description suivante en regard des dessins annexés, le tout donné à titre d'exemple, fera bien comprendre comment l'invention peut être réalisée.

La figure 1 montre la structure d'un annuleur d'écho implanté dans un modem et auquel peut s'appliquer le procédé de l'invention.

La figure 2 montre un mode de réalisation du dispositif de calcul des coefficients.

La figure 3 est un diagramme de signaux destiné à expliquer le fonctionnement du dispositif du calcul des coefficients.

Les figures 4 et 5 montrent deux autres modes de réalisation du dispositif de calcul des coefficients.

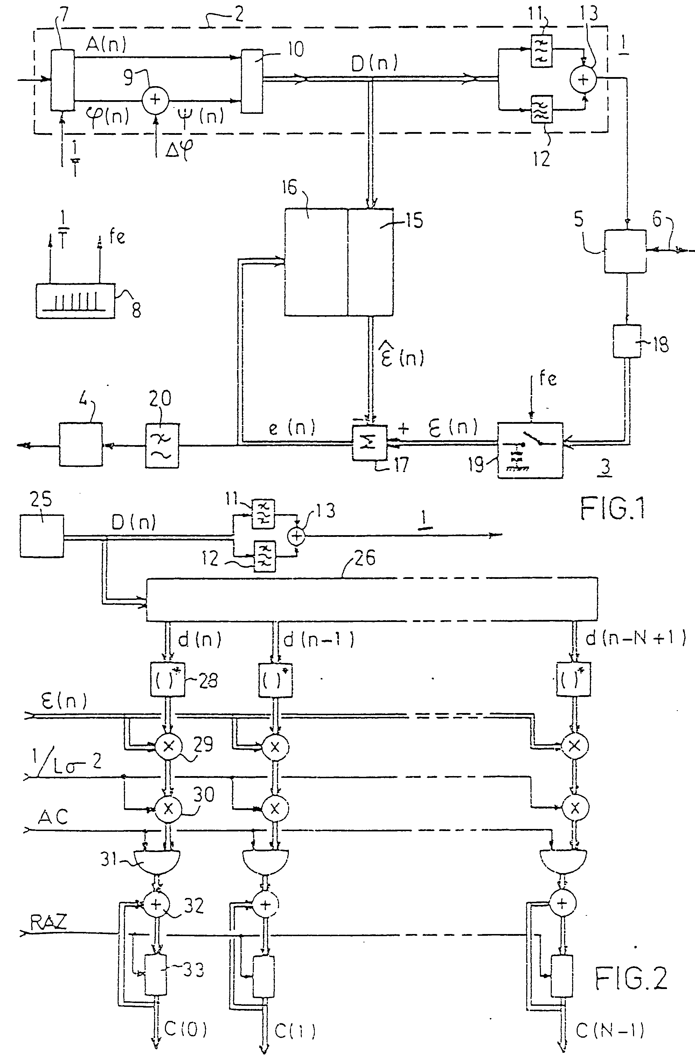

Le modem muni d'un annuleur d'écho dont le schéma est représenté à la figure 1 comporte une voie émission 1 munie d'un modulateur 2 recevant des données provenant d'un terminal non représenté et une voie réception 3 munie d'un récepteur 4 fournissant des données à ce terminal. La sortie du modulateur 2 est reliée à l'accès émission du circuit de couplage 5 et l'accès réception de ce circuit de couplage est relié, par l'intermédiaire d'un certain nombre d'éléments décrits par la suite, à l'entrée du récepteur 4. Ce circuit de couplage 5 permet de coupler les deux voies émission et réception du modem à la voie bidirectionnelle 6, pour des liaisons en duplex simultané avec un modem distant, couplé de la même manière à la voie de transmission 6.

Lorsque le modulateur 2 émet dans la voie émission 1 un signal modulé par les données à transmettre vers le modem distant, il peut se produire dans la voie réception 3 un signal d'écho intempestif provenant d'imperfections du circuit de couplage 5 ou de réflexions dans la voie de transmission 6 et pouvant perturber dans le récepteur 4 la démodulation du signal reçu en provenance du modem distant. L'annuleur d'écho incorporé dans le modem de la figure 1 est chargé d'éliminer le signal d'écho dans la voie réception 3. On suppose pour l'instant que le signal d'écho est de type linéaire, c'est-à-dire que dans le trajet d'écho auquel est appliqué le signal de sortie du modulateur, il ne se produit que des opérations à caractère linéaire, ne faisant pas varier la phase ou la fréquence du signal.

L'annuleur d'écho de la figure 1 utilise un signal de données complexe correspondant aux données appliquées au modulateur. En supposant par exemple que le modem utilise pour la transmission des données la modulation de phase ou de phase et d'amplitude, le signal de données complexe utilisé dans l'annuleur d'écho peut être prélevé dans un modulateur 2 constitué de la façon suivante. Ce modulateur comporte un circuit de codage 7 recevant les données à transmettre et fournissant une paire de signaux représentatifs des amplitudes A(n) et des changements de phase $\varphi$(n) à affecter à la porteuse en fonction des données, à des instants nT déterminés par le générateur 8 de la fréquence 1/T, 1/T étant la cadence de modulation et n un nombre entier variable de $-\infty$ à $+\infty$. Pour tenir compte de la variation de phase $\Delta\varphi$ de la porteuse pendant chaque intervalle de modulation T, on utilise un circuit additionneur 9 pour fournir à chaque instant nT, la somme $\varphi$(n) + $\Delta\varphi$, qui est représentative de la phase absolue $\psi$(n) de la porteuse modulée à émettre. Les deux signaux A(n) et $\psi$(n) sont appliqués au circuit 10 qui forme la composante réelle A(n)cos$\psi$(n) et la composante imaginaire A(n)sin$\psi$(n) d'un signal complexe noté D(n). Dans le modulateur 2, ces deux composantes sont appliquées aux filtres passe-bande 11 et 12 dont les signaux de sortie sont additionnés dans le circuit additionneur 13 pour former le signal analogique de porteuse modulé qui est dirigé vers l'accès émission du circuit de couplage 5.

Le signal complexe D(n) ainsi formé dans le modulateur 2 est utilisé également dans l'annuleur d'écho. On doit noter ici que dans les différents schémas de la présente demande de brevet, les liaisons représentées par un trait double transportent les deux composantes réelle et imaginaire d'un signal complexe, mais le plus souvent on ne parlera que des signaux complexes transportés par ces liaisons. D'autre part, dans des circuits de traitement traitant des nombres complexes, on n'explicitera généralement pas les traitements effectués dans la pratique à partir des composantes réelles et imaginaires de ces nombres complexes.

L'annuleur d'écho inclus dans le modem de la figure 1 comporte un filtre transversal 15 qui reçoit le signal complexe D(n) échantillonné aux instants nT et que l'on suppose par exemple de type analogique. Le filtre transversal 15 est muni d'un circuit de réglage 16 de ses coefficients. Le signal complexe sortant du filtre 15 est appliqué à l'entrée (—) du circuit de différence 17. A l'entrée (+) de ce circuit 17, sont appliqués des échantillons d'un signal analogique, complexe dans le cas général et formé à partir du signal apparaissant à l'accès réception du circuit de couplage 5. Pour former ces échantillons, on utilise un circuit 18 qui fournit un signal complexe dont la partie réelle est le signal provenant du circuit de couplage 5 et dont la partie imaginaire est ce même signal déphasé de 90°. Le signal complexe fourni par le circuit 18 est appliqué au circuit d'échantillonnage et de maintien 19 dans lequel l'échantillonnage est effectué à une fréquence $f_e$ fournie par le générateur 8. Cette fréquence $f_e$ est multiple de la fréquence de modulation 1/T et telle que le théorème de Shannon soit respecté vis-à-vis du signal d'écho, c'est-à-dire vis-à-vis du signal fourni par le modulateur 2. Toutefois, pour simplifier les explications, on ne considère par la suite, parmi les échantillons fournis par le circuit 19, que ceux qui se produisent à la fréquence 1/T, aux mêmes instants nT que les échantillons du signal de données D(n), étant entendu que les autres suites d'échantillons à la fréquence 1/T doivent être traitées de la même manière.

Le signal de différence complexe fourni par le circuit de différence 17 est appliqué au circuit de réglage 16, dans lequel il est utilisé pour régler les coefficients du filtre transversal 15. Lorsque ces coefficients sont convenablement réglés, le signal de copie d'écho fourni par le filtre transversal 15 est substantiellement égal à la version complexe du signal d'écho apparaissant sur l'accès réception du circuit de couplage 5 de sorte que dans le signal de différence apparaissant à la sortie du circuit 17, le signal d'écho est pratiquement annulé. De ce signal de différence complexe et ainsi débarrassé du signal d'écho, le récepteur 4 du modem n'utilise que la composante réelle, préalablement filtrée dans le filtre passe-bas 20.

Pour préciser le fonctionnement d'un tel annuleur d'écho et expliquer comment on peut lui appliquer le procédé de l'invention, il est pratique d'indiquer les calculs à effectuer, en utilisant la notation vectorielle. Ainsi, si le filtre transversal 15 stocke à un instant nT, les N échantillons précédents du signal de données D(n) appliqué à son entrée, ces N échantillons peuvent se représenter par le vecteur $\vec{D}(n)$. Les N coefficients de ce filtre 15 à un instant nT peuvent également se représenter par un vecteur $\vec{C}(n)$.

Avec cette notation, le signal de copie d'écho $\hat{\varepsilon}(n)$ fourni par le filtre transversal résulte de l'opération :

$$\hat{\varepsilon}(n) = \underset{\rightarrow}{D}(n).\vec{C}(n) \tag{1}$$

$\underset{\rightarrow}{D}(n)$ étant la transposée du vecteur $\vec{D}(n)$.

On peut également définir un vecteur $\vec{k}$ ayant N composantes qui sont des échantillons de réponse impulsionnelle du trajet d'écho auquel est appliqué le signal de données D(n). On peut alors écrire que le signal d'écho complexe $\varepsilon(n)$ apparaissant à l'entrée (+) du circuit de différence 17, résulte de l'opération :

$$\varepsilon(n) = \underset{\rightarrow}{D}(n).\vec{k} \tag{2}$$

On suppose pour l'instant que le modem distant n'émet aucun signal de données pouvant se superposer au signal d'écho $\varepsilon(n)$. Le signal d'erreur e(n) apparaissant à la sortie du circuit de différence 17 s'écrit alors :

$$e(n) = \varepsilon(n) - \hat{\varepsilon}(n) = \underset{\rightarrow}{D}(n)[\vec{k} - \vec{C}(n)]$$

Ce signal d'erreur e(n) est annulé si $\vec{C}(n) = \vec{k}$. Pour arriver pratiquement à ce résultat, qui signifie que le signal d'écho est annulé, on utilise dans les annuleurs d'écho connus le critère qui consiste à minimiser la valeur quadratique moyenne du signal d'erreur e(n) et qui se traduit, en utilisant l'algorithme du

4

EP 0 096 936 B1

gradient, par un réglage des coefficients du filtre transversal 15, par récurrences successives, suivant la formule de récurrence :

$$\vec{C}(n+1) = \vec{C}(n) + \alpha.e(n).\vec{D^*}(n) \qquad (3)$$

$\alpha$ étant un coefficient inférieur à 1,
$\vec{D^*}(n)$ étant un vecteur dont les composantes sont conjuguées de celles du vecteur $\vec{D}(n)$.

En utilisant les formules (1) et (2) la formule de récurrence (3) peut aussi s'écrire :

$$\vec{C}(n+1) = \vec{C}(n) + \alpha.\overline{\overline{A}}(n).[\vec{k}-\vec{C}(n)] \qquad (4)$$

$\overline{\overline{A}}(n)$ étant une matrice d'ordre N, telle que :

$$\overline{\overline{A}}(n) = \vec{D}(n)\ \vec{D^*}(n) \qquad (5)$$

Si l'on appelle d(n — i) et d*(n — j) les composantes des vecteurs $\vec{D}(n)$ et $\vec{D^*}(n)$ avec i et j entiers allant de 0 à N — 1, les composantes de la matrice $\overline{\overline{A}}(n)$ peuvent s'écrire :

$$\begin{cases} a_{ij}(n) = d(n-i).d^*(n-j) & \text{pour } i \neq j \\ a_{ii}(n) = |d(n-i)|^2 \end{cases}$$

Dans des annuleurs d'écho connus, le réglage des coefficients du filtre transversal, s'effectue de la même manière, c'est-à-dire par récurrences successives suivant la formule de récurrence (3) ou la formule équivalente (4), aussi bien pendant la période d'apprentissage destinée à initialiser les coefficients, que pendant la période de poursuite au cours de la transmission des données. On est conduit durant la période de poursuite à utiliser un coefficient de pondération $\alpha$ petit par rapport à 1, afin que les coefficients du filtre transversal ne soient pas perturbés par le signal de données provenant du modem distant pendant les transmissions en duplex simultané. Il en résulte de faibles corrections des coefficients et une convergence lente de l'annuleur d'écho. Au début de la période d'apprentissage, il est possible d'opérer avec un coefficient de pondération $\alpha$ plus élevé, mais vers la fin de cette période, on doit opérer avec un coefficient de pondération $\alpha$ du même ordre de grandeur que celui utilisé pendant la période de poursuite. Finalement, avec un réglage des coefficients par récurrences successives, la convergence de l'annuleur d'écho reste lente pendant la période d'apprentissage.

Un procédé dérivé des articles précités est basé sur une combinaison de plusieurs mesures que l'on va maintenant expliquer.

Selon une première mesure, les coefficients du filtre transversal, au lieu d'être modifiés à chaque instant d'échantillonnage nT, sont modifiés tous les « L » instants d'échantillonnage, avec un terme de modification qui est la moyenne des L modifications calculées suivant les formules classiques (3) ou (4). Il en résulte que l'algorithme de modification des coefficients peut s'écrire suivant une formule déduite de la formule (3) :

$$\vec{C}[(p+1)L] = \vec{C}[pL] + \frac{\alpha}{L} \sum_{n=pL}^{(p+1)L-1} e(n).\vec{D^*}(n) \qquad (7)$$

Cet algorithme de modification des coefficients peut aussi s'écrire suivant une formule déduite de la formule (4) :

$$\vec{C}[(p+1)L] = \vec{C}[pL] + \frac{\alpha}{L} \overline{\overline{B}}(pL).[\vec{k}-\vec{C}(pL)] \qquad (8)$$

$\overline{\overline{B}}(pL)$ étant une matrice d'ordre N, qui se déduit de la matrice $\overline{\overline{A}}(n)$ définie par la formule (5) :

$$\overline{\overline{B}}(pL) = \sum_{n=pL}^{(p+1)L-1} \overline{\overline{A}}(n) \qquad (9)$$

5

On déduit alors aisément des formules (6) donnant les composantes de la matrice $\overline{\overline{A}}(n)$ que les composantes de la matrice $\overline{\overline{B}}(pL)$ sont :

$$\left[\begin{array}{l} b_{ij} = \sum_{n=pL}^{(p+1)L-1} d(n-i).d^*(n-j) \qquad \text{pour } i \neq j \\ \qquad\qquad\qquad\qquad\qquad\qquad\qquad i,j = 0,1,..., N-1 \\ b_{ii} = \sum_{n=pL}^{(p+1)L-1} |d(n-i)|^2 \end{array}\right. \tag{10}$$

Une autre mesure prise consiste à utiliser, pour engendrer le signal d'écho et l'annuler, un signal de données $D(n)$ périodique avec une période $LT$ telle que $L \geqslant N$, $NT$ étant le retard total produit par le filtre transversal. Ceci signifie que les composantes $b_{ij}$ et $b_{ii}$ de la matrice $\overline{\overline{B}}(pL)$ se reproduisent périodiquement avec une période définie par $L$ et sont indépendantes de la variable p, si $p \geqslant 1$. On peut donc écrire ces composantes :

$$\left[\begin{array}{l} b_{ij} = \sum_{n=0}^{L-1} d\{n-i\}.d^*(n-j) \qquad \text{pour } i \neq j \\ \qquad\qquad\qquad\qquad\qquad\qquad i,j = 0,1,..., N-1 \\ \text{Avec } \{n-i\} = (n-i) \text{ modulo } L \\ \qquad\quad \{n-j\} = (n-j) \text{ modulo } L \\ b_{ii} = \sum_{n=0}^{L-1} |d\{n-i\}|^2 \end{array}\right. \tag{11}$$

On peut montrer que, du fait de la périodicité du signal de données $D(n)$, les composantes $b_{ii}$ sont indépendantes de l'indice i et, d'après la deuxième formule (10), ont la valeur $b_0$ telle que :

$$b_0 = \sum_{n=0}^{L-1} |d(n)|^2 \tag{12}$$

Cette valeur $b_0$ des composantes $b_{ii}$ peut se mettre sous la forme :

$$b_0 = L\sigma^2$$

où $\sigma^2$ est la puissance de chaque donnée du signal $D(n)$.

On peut montrer d'autre part que les composantes $b_{ij}$ ne dépendent que de la différence d'indices $i-j$ et que $b_{ij} = b^*_{ji}$. Les composantes $b_{ij}$ ayant une différence $i-j$ positive ont des valeurs $b_i$ telles que :

$$b_i = \sum_{n=0}^{L-1} d(n).d^*|\{v-\dot=\}| \tag{13}$$

Les composantes $b_{ji}$ ayant une différence $j-i$ positive ont des valeurs $b_j$ telles que $b_j = b^*_i$.

Finalement, en tenant compte de ces propriétés des composantes de la matrice $\overline{\overline{B}}(pL)$, procurées par la périodicité du signal de données $D(n)$, cette matrice peut s'écrire :

$$\overline{\overline{B}}(pL) = \begin{bmatrix} b_0 & b_1 & b_2 & & & b_{N-1} \\ b^*_1 & b_0 & b_1 & & & \\ b^*_2 & b^*_1 & b_0 & & & b_2 \\ & & & & & b_1 \\ b^*_{N-1} & & b^*_2 & b^*_1 & & b_0 \end{bmatrix}$$

Une autre mesure prise consiste à utiliser un signal de données $D(n)$ tel que les valeurs $b_i$ des

composantes $b_{ij}$ de la matrice $\overline{\overline{B}}(pL)$, telles qu'elles sont données par la formule (13), soient nulles pour $i \# 0$ et $i = 1, 2, ...., N-1$. Cette propriété du signal D(n) s'écrit donc :

$$\sum_{n=0}^{L-1} d(n-).*[\{n-i\}] = 0 \qquad (14)$$

pour $i \# 0$
$i = 1, 2, ..., N-1$.

Cette propriété (14) signifie que la fonction d'autocorrélation du signal de données D(n) considérée entre les données et les données conjuguées, est nulle lorsque leur décalage mesuré modulo LT est de T, 2T, ... $(N-1)$T. Lorsque ce décalage est nul, ou multiple de LT, la fonction d'autocorrélation prend une valeur maximale correspondant à la valeur $b_0 = L\sigma^2$, pour chaque élément de la diagonale de la matrice $\overline{\overline{B}}(pL)$.

Bien entendu, si on choisit le signal de données D(n) de sorte que sa fonction d'autocorrélation soit nulle pour tous décalages autres que zéro et les multiples de LT, on respecte forcément la propriété (14) strictement exigée, puisque l'on a choisi $L > N$.

Avec un signal de données périodique et répondant à la condition (14), toutes les composantes de la matrice $\overline{\overline{B}}(pL)$ sont nulles, sauf celles de la diagonale qui ont la valeur $b_0 = L\sigma^2$ ; cette matrice $\overline{\overline{B}}(pL)$ est donc égale à $L\sigma^2 \cdot II_B$ où $II_N$ est la matrice d'identité.

La formule (8) donnant l'algorithme de modification des coefficients peut alors s'écrire :

$$\vec{C}[(p+1)L] = \vec{C}(pL) + \alpha\sigma^2[\vec{k}-\vec{C}(pL)]$$

soit :

$$\vec{C}[(p+1)L] = \vec{C}(pL)[1-\alpha\sigma^2] + \alpha\sigma^2 \vec{k} \qquad (15)$$

Si le coefficient de pondération $\alpha$ est choisi de telle manière que :

$$\alpha = \frac{1}{\sigma^2}$$

la formule (15) devient :

$$\vec{C}[(p+1)L] = \vec{k} \qquad (16)$$

Ainsi, quelle que soit la valeur des coefficients $\vec{C}(pL)$ du filtre transversal à un instant pLT, on peut obtenir la valeur optimale de ces coefficients $\vec{C}[(p + 1)L]$ à un instant $(p + 1)$LT, égale aux échantillons $\vec{k}$ de la réponse impulsionnelle du trajet d'écho et permettant l'annulation du signal d'écho, en effectuant le calcul donné par la formule (7) dans les conditions précisées ci-dessus. Le modem distant n'émettant aucun signal de données, les opérations à effectuer dans le modem local sont en résumé les suivantes :

— Emission d'un signal de données d'apprentissage D(n), périodique, répondant à la propriété (14). Comme la période LT de ce signal de données est telle que $L \geqslant N$, le filtre transversal procurant un retard NT ne peut emmagasiner au plus qu'une période du signal de données.

— Calcul des coefficients du filtre transversal suivant la formule (7) en choisissant un coefficient de pondération $\alpha$ tel que $\alpha = 1/\sigma^2$, $\sigma^2$ correspondant à la puissance constante de chaque donnée du signal D(n). Comme le montre la formule (7), les coefficients $\vec{C}[(p + 1)L]$ sont obtenus par une seule modification des coefficients $\vec{C}[pL]$, cette modification résultant du calcul pendant une période LT, de la somme des produits $e_v \cdot \overline{D}*(n)$ calculés à chaque instant nT de la période.

Comme on l'a montré ci-dessus, les coefficients obtenus $\vec{C}[(p + 1)L]$ ont, après cette unique modification, les valeurs optimales $\overline{k}$ permettant l'annulation du signal d'écho.

Puisque ce procédé est appliqué en fait à l'apprentissage de l'annuleur d'écho, il est plus commode d'écrire la formule (7), pour la période de durée LT du signal d'apprentissage, telle que $p = 0$. Avec $\alpha = 1/\sigma^2$, la formule (7) devient alors :

$$\vec{C}(L) = \vec{C}(0) + \frac{1}{L\sigma^2} \sum_{n=0}^{L-1} e(n).\vec{D}*(n) \qquad (17)$$

Pour éviter du bruit sur les coefficients, dû à la précision non infinie des calculs, il est préférable que

7

les coefficients $\overrightarrow{C}(0)$ au début de la période de calcul soient annulés, de sorte que dans ce cas utilisé pratiquement, les coefficients $\overrightarrow{C}(L)$ obtenus à la fin de cette période sont formés suivant l'expression :

$$\overrightarrow{C}(L) = \frac{1}{L\sigma^2} \sum_{n=0}^{L-1} e(n).\overrightarrow{D^*}(n) \tag{18}$$

Dans le cas maintenant envisagé où les coefficients $\overrightarrow{C}(0)$ sont annulés, le signal de sortie du filtre transversal $\hat{\varepsilon}(n)$ reste nul pendant toute la période de calcul, de sorte que pendant cette période on a $e(n) = \varepsilon(n)$. Les coefficients du filtre peuvent donc aussi être calculés suivant l'expression :

$$\overrightarrow{C}(L) = \frac{1}{L\sigma^2} \sum_{n=0}^{L-1} \varepsilon(n).\overrightarrow{D^*}(n) \tag{19}$$

Avec le procédé que l'on vient de décrire, le calcul des coefficients du filtre transversal est effectué pendant une seule période de durée LT, du signal de données utilisé pour l'apprentissage de l'annuleur d'écho. Bien entendu pour que ce calcul procure les coefficients optimaux il est nécessaire que le signal d'écho engendré par le signal d'apprentissage D(n) soit présent à l'entrée du circuit de différence de l'annuleur d'écho, au moment du calcul. Pour obtenir les coefficients optimaux, on doit donc émettre le signal d'apprentissage d'abord pendant le temps nécessaire à l'excitation du chemin d'écho, qui est en fait égal au retard NT procuré par le filtre transversal si ce dernier est dimensionné au plus juste, puis pendant le temps de calcul LT des coefficients. Avec ce procédé le temps de convergence de l'annuleur d'écho, à partir du moment où l'on commence à émettre la séquence d'apprentissage, peut donc être réduit à (L + N)T, et à la valeur minimale 2NT, dans le cas où L = N. Dans ce dernier cas, pour annuler par exemple un écho de 20 mS, le temps nécessaire est de 40 mS, à comparer à des temps de convergence de l'ordre de la seconde obtenus avec les annuleurs d'écho connus.

On peut remarquer que dans le cas général où le signal de données D(n) est complexe, la relation (14) définissant la propriété de ce signal à respecter, se traduit par deux relations à respecter simultanément et concernant respectivement la partie réelle et la partie imaginaire du premier membre de la relation (14). En ce qui concerne le choix du signal d'apprentissage respectant ces relations, on utilise de préférence les valeurs de données qui sont normalement transmises par le modem et qui ont des valeurs telles que 0, $\pm 1$, $\pm j$, $\pm \sqrt{2}$, $\pm j\sqrt{2}$, ..., etc. Un signal d'apprentissage répondant à la relation (14) et comprenant 16 éléments dans une période est formé par exemple à l'aide de la séquence : 1, 1, 1, 1, 1, j, — 1, — j, 1, — 1, 1, — 1, 1, — j, — 1, j.

Avec un signal de données d'apprentissage D(n) répondant à la propriété définie par la relation (14), on obtient l'annulation du signal d'écho comme on l'a expliqué, sans aucune restriction concernant le spectre de ce signal. En particulier un tel signal d'apprentissage convient pour annuler un signal d'écho comportant ou non une composante continue. Le cas d'un écho comportant une composante continue se produit par exemple dans le cas d'un annuleur d'écho utilisé dans un modem de transmission en bande de base ou dans le cas où l'annulation de l'écho est effectuée après la démodulation d'un signal transmis par modulation d'une porteuse. Le cas d'un écho sans composante continue se produit par exemple dans le système envisagé sur la figure 1, dans lequel l'écho est engendré par un signal de porteuse modulée et son annulation est effectuée directement sur le signal reçu avant sa démodulation.

Dans un cas tel que celui envisagé sur la figure 1, où le signal d'écho ne comporte pas de composante continue, on peut utiliser, selon une variante de l'invention, un signal d'apprentissage périodique D(n) qui, au lieu de répondre à la condition (14), répond à la condition :

$$\sum_{n=0}^{L-1} d(n).d^*[\{n-i\}] = -1 \tag{20}$$

pour $i \neq 0$
$i = 1, 2, ... N — 1$.

Cette condition (20) peut être remplie en particulier au moyen des séquences de données connues sous le nom de séquences de longueur maximale dont la fonction d'autocorrélation prend, à un facteur constant près, la valeur — 1 pour tous décalages autres que zéro et les multiples de la période LT de la séquence et la valeur L pour un décalage nul ou multiple de LT.

Si l'on utilise un signal d'apprentissage D(n) répondant à cette condition (20), la matrice $\overline{\overline{B}}(pL)$ a ses composantes $b_0$ situées sur la diagonale, encore égales à $L\sigma^2$, tandis que toutes ses autres composantes sont égales à — 1. On peut démontrer que dans ce cas, si l'on applique la formule (8) de calcul des coefficients avec $\alpha = 1/\sigma^2$ et $\overline{C}(pL) = 0$ (coefficients initialisés à zéro), on obtient :

$$\overrightarrow{C}[(p+1)L] = \overrightarrow{k} - \frac{1}{L\sigma^2} \overrightarrow{d}$$

Dans cette expression $\vec{d}$ est un vecteur dont les N composantes sont égales à $k_0 + k_1 \ldots + k_{N-1}$, c'est-à-dire à la somme des composantes du vecteur $\vec{k}$. Ce vecteur $\vec{d}$ représente ainsi la composante continue de la réponse impulsionnelle du chemin d'écho. Or le signal d'écho ne peut être annulé que si pratiquement $\vec{C}[(p + 1)L] = \vec{k}$. Il en résulte que, pour qu'un signal d'apprentissage répondant à la propriété (20) puisse permettre l'annulation de l'écho, il est nécessaire que cet écho ne comporte pas de composante continue.

Par la suite, on supposera généralement que le signal d'apprentissage répond à la propriété (14) qui convient à tous les cas, étant entendu qu'il peut répondre aussi à la propriété (20) si le signal d'écho n'a pas de composante continue.

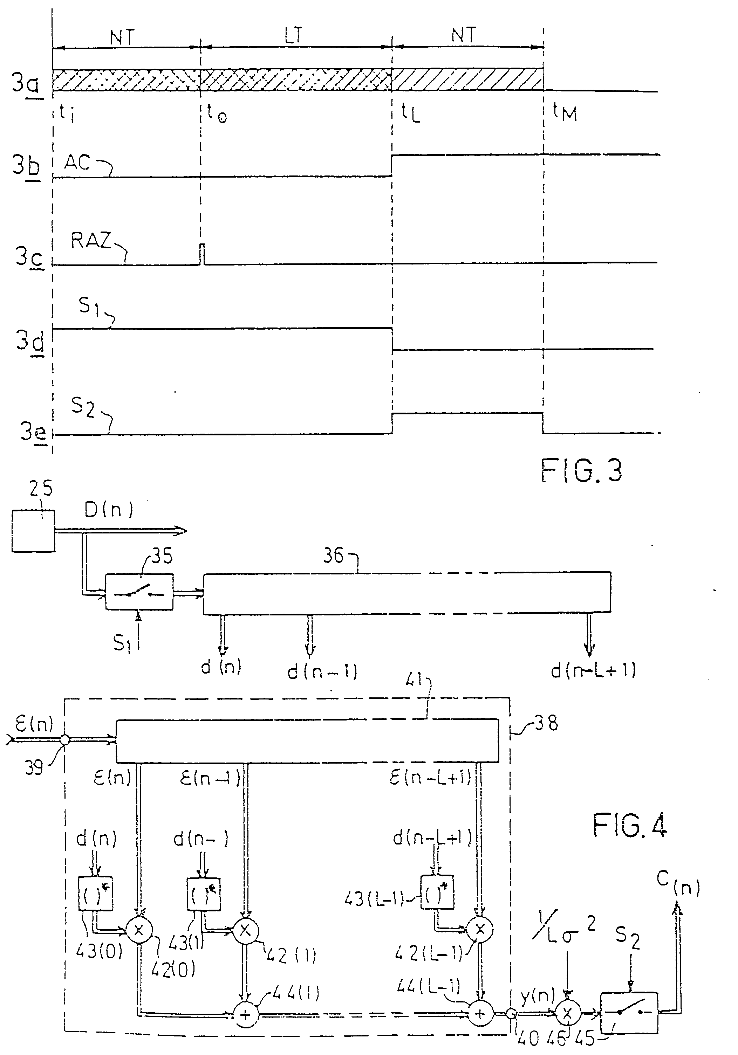

La figure 2 montre une configuration possible pour le dispositif de calcul des coefficients du filtre transversal 15, pendant la période d'apprentissage d'un annuleur d'écho utilisant le procédé de l'intervention, tandis que sur la figure 3 les diagrammes de signaux 3a à 3c sont destinés à en expliquer le fonctionnement.

Sur la figure 2, on a représenté un générateur 25 qui fournit un signal d'apprentissage complexe D(n) de période LT, ayant les propriétés d'autocorrélation expliquées ci-dessus. Pendant la période d'apprentissage ce générateur 25 est connecté d'une part à la voie émission 1 du modem, par l'intermédiaire de l'ensemble des circuits 11, 12, 13 fournissant le signal de porteuse modulée et d'autre part à l'entrée d'une mémoire 26 agencée pour fournir en parallèle sur N sorties, les N derniers échantillons du signal appliqué à son entrée pendant une durée NT. Cette mémoire 26 est par exemple celle qui est utilisée normalement dans le filtre transversal 15 de l'annuleur d'écho. Sur le diagramme 3a de la figure 3, on a représenté par une zone doublement hachurée le temps pendant lequel, dans la configuration de la figure 2, le signal d'apprentissage D(n) est fourni à la voie émission 1 du modem et à la mémoire 26, à partir d'un instant initial $t_i$. On se place dans le cas général où la période LT du signal d'apprentissage est supérieur au temps de stockage NT de la mémoire 26, ce temps NT étant au moins égal au temps d'excitation du chemin d'écho. A partir du temps $t_0 = t_i + NT$, on est certain que le signal d'écho $\varepsilon(n)$ est présent dans la voie réception 3 du modem. Le dispositif de calcul de la figure 2 permet de calculer les N coefficients du filtre transversal 15, pendant la période LT du signal d'apprentissage s'étendant de l'instant $t_0$ à l'instant $t_L = t_0 + LT$. Ce dispositif de calcul des coefficients comporte N circuits identiques qui sont connectés sur les N sorties de la mémoire 26 pour recevoir respectivement à un instant donné nT les échantillons d(n), d(n—1), ... d(n—N+1) du signal d'apprentissage et qui fournissent respectivement à l'issue de la période de calcul les N coefficients C(0), C(1),... C(N — 1).

Le circuit de calcul du coefficient C(0) par exemple, comporte un circuit 28 formant la valeur conjuguée d*(n) de l'échantillon d(n) du signal d'apprentissage. Cette valeur conjuguée est multipliée dans le circuit multiplicateur 29 par le signal d'écho $\varepsilon(n)$ en supposant que l'on applique la formule (19). Chaque produit ainsi formé $\varepsilon(n) \cdot d^*(n)$ est appliqué au circuit multiplicateur 30 pour y être multiplié par le facteur constant $1/L\sigma^2$. Le signal de sortie du circuit multiplicateur 30 est appliqué à la porte 31 qui peut être bloquée par un signal AC d'arrêt de calcul, comme on l'expliquera par la suite. La sortie de la porte 31 est connectée à un accumulateur formé par la mémoire 33 et le circuit additionneur 32. Le contenu de la mémoire 33 peut être remis à zéro par un signal RAZ et fournit le coefficient C(0) du filtre transversal à l'issue de la période de calcul. Les autres circuits de calcul des coefficients utilisent de la même manière le signal d'écho $\varepsilon(n)$, le facteur constant $1/L\sigma^2$ et les signaux de commande AC et RAZ.

Le fonctionnement d'un circuit de calcul des coefficients, tel que le circuit fournissant le coefficient C(0) est le suivant : les signaux de commande AC et RAZ ont la forme montrée sur les diagrammes 3b et 3c de la figure 3. Le signal d'arrêt de calcul AC est bas jusqu'à l'instant $t_L$ et permet jusqu'à cet instant au signal de sortie du circuit multiplicateur 30 d'être appliqué via la porte 31, à l'accumulateur 33, 32. Mais le calcul effectif des coefficients ne commence qu'à l'instant $t_0$ où se produit dans le signal RAZ, une impulsion qui remet à zéro la mémoire 33 de l'accumulateur. A partir de cet instant $t_0$, l'accumulateur forme la somme des termes $(1/L^2) \cdot \varepsilon(n) \cdot d^*(n)$ fournis par le circuit multiplicateur 30 et à l'instant $t_L = t_0 + LT$, cette somme formée dans l'accumulateur constitue le coefficient C(0). A l'instant $t_L$, le signal AC d'arrêt de calcul devient haut et bloque la porte 31 de sorte qu'après l'instant $t_L$ le coefficient C(0) calculé reste disponible à la sortie de la mémoire de l'accumulateur pour être utilisé dans le filtre transversal 15. Les autres coefficients du filtre transversal C(1) à C(N—1) sont calculés de la même manière pendant la période de temps allant de $t_0$ à $t_L$ et sont disponibles simultanément après l'instant $t_L$ pour être utilisés dans le filtre transversal.

Après la période d'apprentissage qui a ainsi permis d'initialiser les coefficients du filtre transversal de l'annuleur d'écho, le générateur 25 de la séquence d'apprentissage est déconnecté et le modem est établi dans la configuration de la figure 1 pour transmettre les données utiles. Pendant la transmission des données, les coefficients du filtre transversal 15 de l'annuleur d'écho peuvent être asservis par des procédés connus consistant généralement à modifier les coefficients par récurrences successives suivant la formule de récurrence (3) indiquée ci-dessus. Il est aisé de voir que les circuits décrits à la figure 2, qui permettent le calcul des coefficients pendant la période d'apprentissage, permettent également l'asservissement des coefficients pendant la transmission des données, si le signal AC reste en permanence à l'état bas pour que la porte 31 reste passante et si le contenu de l'accumulateur n'est pas remis à zéro par le signal RAZ, le facteur constant $\alpha$ pouvant être ajusté à une valeur différente de la valeur $1/L\sigma^2$ utilisée pendant la période d'apprentissage.

La figure 4 montre une autre configuration possible pour le dispositif de calcul des coefficients du filtre transversal 15, pendant la période d'apprentissage. Au lieu de fournir ces coefficients simultanément, le dispositif de la figure 4 fournit les coefficients successivement.

La figure 4 montre le générateur 25 du signal d'apprentissage D(n) qui, pendant la période d'apprentissage est connecté, d'une part, à la voie émission 1 du modem, comme sur la figure 2 et d'autre part, via un circuit interrupteur 35, à l'entrée d'une mémoire 36 agencée pour fournir en parallèle sur L sortie, les L derniers échantillons du signal appliqué à son entrée. Dans le cas où L = N la mémoire 36 peut être entièrement constituée par celle agencée pour N échantillons, dont est normalement muni le filtre transversal 15. Le circuit interrupteur 35 étant d'abord supposé fermé, il est ouvert par un signal de commande S₁, à un instant que l'on précisera par la suite, de telle manière que sur les L sorties de la mémoire 36 restent disponibles les échantillons d(n), d(n — 1), ..., d(n — L + 1) du signal d'apprentissage.

Le dispositif de calcul des coefficients proprement dit a la forme d'un filtre transversal 38 dont l'entrée 39 reçoit le signal d'écho ε(n) et dont la sortie 40 fournit le signal y(n) qui, pendant un intervalle de temps NT bien déterminé, s'identifie aux N coefficients en série du filtre transversal 15 de l'annuleur d'écho. Les échantillons du signal d'écho ε(n) sont appliqués à une entrée de la mémoire 41 agencée pour fournir en parallèle sur L sorties, les L derniers échantillons du signal appliqué à son entrée. A l'instant où le circuit interrupteur 35 est ouvert, les échantillons apparaissant sur les L sorties de la mémoire 41 sont ε(n), ε(n — 1), ..., ε(n — L + 1). Ces échantillons sont appliqués respectivement à une entrée des circuits multiplicateurs 42(0), 42(1), ..., 42(L — 1) dont l'autre entrée reçoit les valeurs conjuguées d*(n), d*(n — 1), ..., d*(n + L — 1) des échantillons de signal d'apprentissage disponibles sur les L sorties de la mémoire 36. Ces valeurs conjuguées constituent les coefficients du filtre transversal 38 ; elles sont formées respectivement par les circuits 43(0), 43(1), ..., 43(L — 1). Les échantillons de sortie des circuits multiplicateurs 42(0), 42(1), ..., 42(L — 1) sont additionnés à l'aide de la chaîne de circuits d'addition 44(1), ..., 44(L — 1). A la sortie de cette chaîne, on obtient le signal de sortie y(n) du filtre transversal 38. Ce signal y(n) est appliqué au circuit multiplicateur 46 pour y être multiplié par le facteur constant 1/Lσ², puis le produit (1/Lσ²)·y(n) est appliqué au circuit interrupteur 45 qui, sous la commande d'un signal S₂, ouvre une fenêtre temporelle de durée NT, pendant laquelle on obtient N échantillons successifs constituant les N coefficients C̄(n) du filtre transversal 15 de l'annuleur d'écho.

Les conditions temporelles permettant d'obtenir ce résultat peuvent être précisées à l'aide des diagrammes 3d et 3e de la figure 3, qui représentent respectivement les signaux de commande S₁ et S₂ commandant la fermeture des circuits interrupteurs 35 et 45. De l'instant initial t, à l'instant $t_L$, le circuit interrupteur 35 est fermé par le signal de commande S₁ et le circuit interrupteur 45 est ouvert par le signal de commande S₂. A l'instant $t_0$, le signal d'écho commence à apparaître à l'entrée 39 de la mémoire 41 et pendant la période LT du signal d'apprentissage s'écoulant de $t_0$ à $t_L$, la mémoire 41 emmagasine des échantillons du signal d'écho, tandis que la mémoire 36 emmagasine des échantillons du signal d'apprentissage. A l'instant $t_L$, le circuit interrupteur 35 s'ouvre sous la commande du signal S₁ et L échantillons d(n) à d(n — L + 1) restent emmagasinés dans la mémoire 36. A l'instant $t_L$, le circuit interrupteur 45 se ferme sous la commande du signal S₂. Juste après l'instant $t_L$, le filtre 38 calcule un premier échantillon y(n) tel que :

$$y(n) = \sum_{m=0}^{L-1} \varepsilon(n-m) \cdot d^*(n-m)$$

Ce premier échantillon y(n) multiplié par le facteur 1/Lσ² constitue le premier coefficient C(0) du filtre transversal 15 de l'annuleur d'écho, qui est transmis par le circuit interrupteur 45. Ce dernier reste ouvert pendant une durée NT suivant l'instant $t_L$, jusqu'à l'instant $t_M$. Pendant toute cette durée représentée par une zone simplement hachurée sur le diagramme 3a le filtre transversal 38 utilise les mêmes coefficients d*(n) à d*(n — L + 1) et après chaque instant $t_L + iT (0 \leq i \leq N — 1)$, ce filtre 38 calcule un échantillon y(n + i) tel que :

$$y(n+i) = \sum_{m=0}^{L-1} \varepsilon(n+i-m) \cdot d^*(n-m)$$

Les N échantillons y(n) à y(n + N — 1) fournis par le filtre 38 et multipliés par le facteur constant 1/Lσ² sont transmis par le circuit interrupteur 45 jusqu'à l'instant $t_M$ pour former les N coefficients C(0) à C(N — 1) du filtre transversal 15 de l'annuleur d'écho. On peut remarquer qu'avec la configuration de la figure 4, le temps $t_M$ requis pour obtenir ces N coefficients en série est supérieur de NT au temps $t_L$ requis avec la configuration de la figure 2 pour obtenir les N coefficients en parallèle.

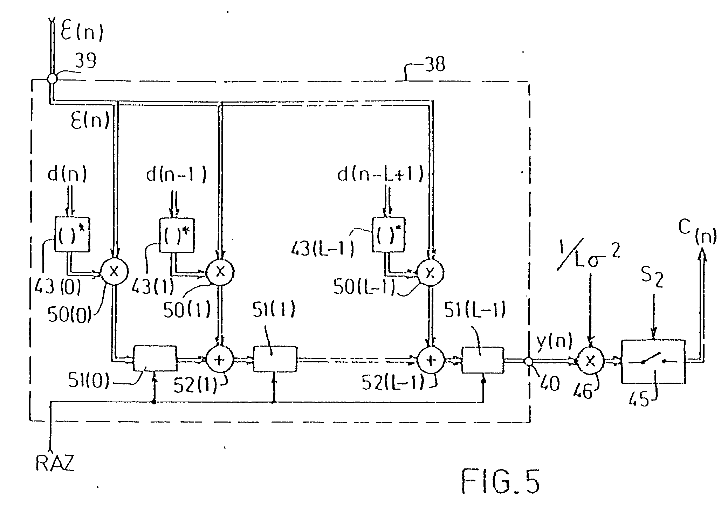

Dans la configuration du dispositif de calcul des coefficients de la figure 4, le filtre transversal 38 peut être réalisé de façon différente, par exemple selon le schéma connu en soi montré sur la figure 5. Sur la figure 5, les éléments ayant la même fonction que sur la figure 4 sont référencés de la même manière. On voit sur la figure 5 que chaque échantillon ε(n) du signal d'écho est directement appliqué à L circuits multiplicateurs 50(0) à 50(L — 1) qui reçoivent d'autre part, en provenance des circuits 43(0) à 43(L — 1), les valeurs conjuguées des échantillons d(n) à d(n — L + 1) du signal d'apprentissage. Ces échantillons sont formés comme l'indique la figure 4 aux sorties de la mémoire 36. Le filtre 38 comporte également L registres-mémoires 51(0) à 51(L — 1) qui procurent chacun un retard T sur leurs échantillons d'entrée. Les échantillons de sortie des registres 51(0) à 51(L — 2) sont appliqués à une entrée des L — 1 circuits additionneurs 52(1) à 52(L — 1). La sortie du circuit multiplicateur 50(0) est reliée à l'entrée du registre 51(0). La sortie des circuits multiplicateurs 50(1) à 50(L — 1) est reliée à une entrée des circuits additionneurs 52(1) à 52(L — 1). La sortie du circuit additionneur 52(L — 1) est reliée à la sortie 40 du filtre transversal 38 par l'intermédiaire du registre 51(L — 1). Le signal de sortie y(n) de ce filtre transversal est traité de la même manière que sur la figure 4, c'est-à-dire multiplié par le facteur constant $1/L\sigma^2$ à l'aide du circuit 46, puis appliqué au circuit interrupteur 45 dont la fermeture est commandée par le signal $S_2$.

Avec un filtre 38 constitué de cette manière, les registres-mémoires 51(0) à 51(L — 2) doivent être remis à zéro par une impulsion du signal RAZ montré sur le diagramme 3c et se produisant à l'instant $t_0$. Pendant l'intervalle de temps LT s'écoulant de l'instant $t_0$ à l'instant $t_L$, des résultats partiels apparaissent à la sortie 40 du filtre transversal 38 et ne sont pas utilisés puisque le circuit interrupteur 45 est alors ouvert. Pendant l'intervalle de temps NT s'écoulant de l'instant $t_L$ à l'instant $t_M$, des résultats de calcul complets apparaissent à la sortie 40 du filtre 38 et permettent d'obtenir à la sortie du circuit interrupteur 45 alors fermé, les N coefficients C(0) à C(N — 1) du filtre transversal 14 de l'annuleur d'écho.

Jusqu'à présent, on a supposé que le procédé de l'invention et le dispositif de calcul correspondant étaient utilisés dans un modem local, en l'absence de tout signal provenant du modem distant, c'est-à-dire dans les conditions prévues actuellement par le CCITT pour la période d'apprentissage de l'annuleur d'écho. Mais des variantes du procédé de l'invention, utilisant des dispositifs semblables, permettent également de réduire le temps de convergence d'un annuleur d'écho, lorsqu'un signal de données est reçu en provenance du modem distant.

On se place d'abord dans le cas où le modem distant émet un signal de données quelconque, alors que dans le modem local l'on cherche à retrouver une annulation d'écho perdue. Cette situation peut se produire par exemple si le dispositif d'asservissement des coefficients de l'annuleur d'écho n'a pas fonctionné correctement pendant une transmission en duplex simultané, alors que l'on est dans l'impossibilité de commander l'arrêt de l'émission des données par le modem distant. Dans ce cas, le signal ε(n) appliqué au circuit de différence 17 de l'annuleur d'écho, n'a plus seulement la valeur du signal d'écho $\underline{D}(n) \cdot \vec{k}$ comme l'indique la formule (2), mais la valeur :

$$\varepsilon(n) = \underset{\rightarrow}{D}(n).\vec{k} + b(n) \qquad (21)$$

Dans cette expression de ε(n), b(n) est un terme additif de bruit procuré par le signal de données provenant du modem distant.

Si l'on utilise le procédé de l'invention en calculant, conformément à la formule (19), les coefficients $\overline{C}(L)$ du filtre transversal 15 de l'annuleur d'écho, au lieu d'obtenir les coefficients $\overline{C}(L) = \overline{k}$ permettant d'annuler exactement le signal d'écho, on obtient, avec un signal ε(n) selon la formule (21), les coefficients :

$$\vec{C}(L) = \vec{k} + \frac{1}{L\sigma^2} \sum_{n=0}^{L-1} b(n).\vec{D^*}(n) \qquad (22)$$

Le bruit b(n) dans le signal ε(n) se traduit par un bruit $\vec{\Delta C}$ au niveau des coefficients du filtre transversal 15 de l'annuleur d'écho, ce bruit $\vec{\Delta C}$ étant égal au deuxième terme de l'expression des coefficients de la formule (22). Si l'on appelle $\sigma_b^2$ l'erreur quadratique du bruit b(n), l'erreur quadratique moyenne du bruit $\vec{\Delta C}$ au niveau des coefficients peut s'écrire :

$$E[|\Delta C|^2] = \frac{1}{L^2\sigma^2}.L.\sigma_b^2.N\sigma^2 = \frac{N}{L}\frac{\sigma_b^2}{\sigma^2}$$

Le bruit $\vec{\Delta C}$ des coefficients détermine alors à la sortie du circuit de différence 17, un signal d'écho résiduel ê(n) qui a pour erreur quadratique :

$$E[|\hat{e}(n)|^2] = E[|\vec{\Delta C}|^2].\sigma^2 = \frac{N}{L}\sigma_b^2$$

11

On en déduit que le rapport R de la puissance de l'écho résiduel ê(n) à la puissance du bruit b(n) engendré par le modem distant vaut :

$$R = \frac{E[\,|\hat{e}(n)|^2\,]}{\sigma^2_b} = \frac{N}{L} \tag{23}$$

Cette formule (23) permet de fixer la durée LT du signal d'apprentissage à prendre en considération pour calculer les coefficients du filtre transversal 15, afin d'obtenir un rapport R déterminé. Pour obtenir par exemple un écho résiduel ê(n) dont la puissance soit à 20 dB au-dessus de la puissance du bruit b(n), on doit choisir R = N/L = 1/100, soit L = 100 N. La durée LT peut être la période effective du signal d'apprentissage qui peut être très grande, par exemple dans le cas où L = 100 N. Pour éviter d'avoir à former un signal d'apprentissage de période très grande, on peut aussi utiliser un signal d'apprentissage de période plus courte, par exemple de durée L'T = NT et prendre en considération pour le calcul des coefficients un intervalle de temps de durée LT multiple de L'T et correspondant au rapport R choisi.

Dans le procédé de l'invention tel qu'on vient de le décrire pour le cas où le modem distant émet un signal de données quelconque, les coefficients du filtre transversal de l'annuleur d'écho sont calculés par intégration de termes de correction des coefficients pendant une durée LT suffisamment longue pour que l'écho résiduel atteigne une faible valeur souhaitée. Dans une variante de l'invention appliquée au même cas, on utilise un signal d'apprentissage dont la période LT est égale à NT et qui possède les propriétés d'autocorrélation définies ci-dessus ; mais les coefficients du filtre transversal de l'annuleur d'écho sont modifiés en plusieurs étapes successives pendant chacune desquelles les corrections calculées sont intégrées pendant une durée LT = NT, avant d'être appliquées effectivement aux coefficients. Les modifications des coefficients après chaque étape p, sont effectuées selon la formule de récurrence (7) avec $\sigma = 1/\sigma^2$, les coefficients étant initialisés à la valeur 0, au début de la première étape p = 0, ce qui revient à utiliser la formule (18) pour le calcul des coefficients dans cette première étape. Les différentes variantes de l'invention appliquées au cas où le modem distant émet un signal de données quelconque procurent des temps de convergence de l'annuleur d'écho du même ordre de grandeur.

Le procédé de l'invention appliqué à une période d'apprentissage précédant la transmission des données permet d'obtenir, grâce à l'emploi d'un signal d'apprentissage particulier, la convergence rapide de l'annuleur d'écho d'un modem local, à condition que le modem distant n'émette aucun signal ; à partir d'un instant initial $t_i$ où l'on commence à émettre le signal d'apprentissage, le temps de convergence peut être réduit jusqu'à la valeur 2NT. Pour faire converger les annuleurs d'écho de deux modems d'une liaison en duplex, le procédé décrit jusqu'à présent doit être appliqué successivement à ces annuleurs d'écho, ce qui double au moins le temps de convergence pour l'ensemble de la liaison, et ce qui nécessite une procédure particulière qu'il n'est pas toujours possible de mettre en œuvre.

L'invention permet d'éviter ces difficultés, en permettant la convergence en duplex des deux annuleurs d'écho d'une liaison, moyennant d'autres propriétés imposées aux signaux d'apprentissage émis dans ces deux modems.

Les différents calculs qui suivent sont développés pour un des deux modems. Pour obtenir les formules relatives à l'autre modem, on permutera les valeurs D(n) et G(n) et les coefficients du filtre transversal et le signal de référence de l'autre modem seront affectés d'un accent pour devenir C', C'$_0$, e' comme indiqué ci-dessus dans le présent exposé.

On appelle comme précédemment $\overrightarrow{D}(n)$ le vecteur à N composantes, caractérisant les échantillons du signal D(n) des données d'apprentissage émis par le modem local et $\overrightarrow{k}$ le vecteur à N composantes caractérisant les échantillons de la réponse impulsionnelle du trajet d'écho pour le modem local. Pour le modem distant, on appelle $\overrightarrow{G}(n)$ le vecteur à N composantes caractérisant les échantillons d'un signal d'apprentissage G(n). Chaque donnée du signal G(n) à un instant nT a la valeur g(n). D'autre part les échantillons de la réponse impulsionnelle du trajet entre le modem distant et le modem local sont caractérisés par le vecteur $\overrightarrow{h}$ à N composantes.

Dans ces conditions, le signal $\varepsilon(n)$ apparaissant à l'entrée (+) du circuit de différence 17 de l'annuleur d'écho s'écrit :

$$\varepsilon(n) = \overrightarrow{D}(n).\overrightarrow{k} + \overrightarrow{G}(n)\,\overrightarrow{h}$$

On suppose pour l'instant que les signaux D(n) et G(n) ont seulement les propriétés déjà décrites, c'est-à-dire sont périodiques avec la période LT et ont les propriétés d'autocorrélation du type défini par la formule (14). Si les coefficients du filtre transversal de l'annuleur d'écho local sont calculés par intégration sur une période LT, suivant la formule (19), on obtient pour ces coefficients la valeur :

$$\overrightarrow{C}(L) = \overrightarrow{k} + \frac{1}{L\sigma^2}\left[\sum_{n=0}^{L-1} \overrightarrow{D^*}(n).\overrightarrow{G}(n)\right].\overrightarrow{h} \tag{24}$$

Les coefficients $\overrightarrow{C}(L)$, calculés de cette manière différent des valeurs souhaitées $\overrightarrow{k}$ d'une quantité dépendant de la matrice $\overline{\overline{F}}$ telle que :

$$\overline{\overline{F}} = \sum_{n=0}^{L-1} \overrightarrow{D^*(n)} . \overrightarrow{G(n)}$$

La matrice $\overline{\overline{F}}$ est une matrice carrée d'ordre N ayant comme composantes :

$$\left[ \begin{array}{l} f_{ij} = \sum_{n=0}^{L-1} d^*(n-i).g(n-j) \\[3mm] f_{ii} = \sum_{n=0}^{L-1} d^*(n-i).g(n-i) \end{array} \right. \qquad \begin{array}{l} \text{pour } i \# j \\[2mm] \text{et} \quad i,j = 0,1,...,\ N-1 \end{array}$$

Puisque les signaux D(n) et G(n) ont la même période LT, les composantes $f_{ij}$ et $f_{ii}$ peuvent s'écrire :

$$\left[ \begin{array}{l} f_{ij} = \sum_{n=0}^{L-1} d^*\{n-i\}.g\{n-j\} \\[3mm] f_{ii} = \sum_{n=0}^{L-1} d^*\{n-i\}.g\{n-i\} \end{array} \right. \qquad (25)$$

Dans les formules (25) les accolades signifient que les quantités entre les accolades sont prises modulo L.

On suppose maintenant que les signaux d'apprentissage D(n) et G(n) de même période, ont en plus de leurs propriétés d'autocorrélation, la propriété d'être complètement décorrélés entre eux. Cette propriété supplémentaire se traduit par le fait que :

$$\sum_{n=0}^{L-1} d^*\{n-i\}.g\{n-j\} = 0 \qquad (26)$$

pour i, j = 0, 1, ..., N — 1.

Cette propriété (26) peut être obtenue par exemple si G(n) est une version retardée de D(n) ou la version inversée dans le temps de D(n).

Si les signaux d'apprentissage D(n) et G(n) jouissent de la propriété (26), toutes les composantes $f_{ij}$ et $f_{ii}$ de la matrice $\overline{\overline{F}}$ sont nulles, de sorte que, d'après la formule (24), les coefficients $\overrightarrow{C}(L)$ de l'annuleur d'écho local prennent les valeurs souhaitées $\overrightarrow{k}$ de la réponse impulsionnelle du trajet d'écho du modem local. Si les deux annuleurs d'écho d'une liaison travaillent simultanément de cette manière avec deux signaux d'apprentissage D(n) et G(n) complètement décorrélés entre eux au niveau du signal reçu dans chaque modem, les coefficients des deux annuleurs d'écho sont obtenus simultanément après une période LT d'intégration des corrections des coefficients.

Dans le cas où pour les deux modems d'extrémités d'une liaison, le signal d'écho ne comporte pas de composante continue, on peut aussi utiliser des signaux d'apprentissage périodique D(n) et G(n) répondant à 'a propriété d'autocorrélation (20) et répondant en outre à la propriété supplémentaire :

$$\sum_{n=0}^{L-1} d^*\{n-i\}.e\{n-j\} = -1$$

pour i, j = 0, 1, ... N — 1.

On a considéré jusqu'à présent que la fréquence d'échantillonnage $f_e$ dans la voie réception du modem était égale à la fréquence de modulation 1/T, c'est-à-dire la fréquence d'échantillonnage des données dans le signal d'apprentissage tel que D(n). Or, normalement la fréquence d'échantillonnage $f_e$ est un multiple de la fréquence 1/T. Un annuleur d'écho utilisant le procédé de la présente invention avec une fréquence d'échantillonnage $f_e$ telle que $f_e = q \cdot 1/T$ et recevant le signal de données D(n) échantillonné à la fréquence 1/T, doit être agencé pour calculer q jeux de coefficients du filtre transversal. Un premier agencement consiste à faire travailler l'annuleur d'écho en répartition dans le temps pour calculer ces q jeux de coefficients au cours d'une seule période d'intégration LT. Un deuxième

13

agencement nécessitant des circuits moins rapides consiste à calculer successivement les q jeux de coefficients ; le calcul de chaque jeu nécessite une période d'intégration LT, de sorte que le temps de convergence total de l'annuleur d'écho devient qLT.

On peut mettre en œuvre le procédé de l'invention avec une séquence d'apprentissage D(n) ayant les propriétés particulières définies ci-dessus, en utilisant l'algorithme du signe, à condition toutefois de modifier les coefficients du filtre transversal en plusieurs étapes successives, pendant chacune desquelles les corrections calculées sont intégrées pendant une durée LT avant d'être appliquées effectivement aux coefficients. Les modifications des coefficients après chaque étape p sont alors effectuées selon la formule de récurrence ci-après, déduite de la formule (7) :

$$C[(p+1)L] = C[pL] + \frac{1}{L\sigma^2} \sum_{n=pL}^{(p+1)L-1} \text{Signe}[e(n) \cdot \vec{D^*}(n)]$$

Au début de la première étape telle que p = 0, les coefficients sont initialisés à la valeur 0. Il est clair qu'avec l'algorithme du signe, on n'obtient pas les coefficients avec une précision suffisante. Le processus est donc répété pendant un certain nombre d'étapes, jusqu'à obtenir les coefficients avec la précision souhaitée. L'utilisation de l'algorithme de signe dans le procédé de l'invention augmente donc le temps de convergence de l'annuleur d'écho, mais permet une simplification importante des circuits de calcul.

On peut considérer le signal d'écho reçu sur la voie réception du modem et directement utilisé dans l'annuleur d'écho maintenant considéré, comme la partie réelle du signal d'écho complexe qui serait formé par le circuit 18 dans le cas de l'annuleur d'écho de la figure 1. Après échantillonnage, ce signal d'écho reçu est $\varepsilon_R(n)$ et peut donc s'écrire :

$$\varepsilon_R(n) = \mathbb{R}_e[\varepsilon(n)] = \varepsilon(n) + \varepsilon^*(n)$$

au facteur 1/2 près.

Il en résulte qu'un signal de données D(n) émis pendant un premier intervalle de temps procure un signal d'écho $\varepsilon_{R1}(n)$ ayant la forme :

$$\varepsilon_{R1}(n) = \underset{\rightarrow}{D}(n).\vec{k} + \underset{\rightarrow}{D^*}(n).\vec{k^*} \tag{27}$$

Si, selon le procédé usuel de l'invention, ce signal D(n) est le signal d'apprentissage périodique ayant les caractéristiques d'autocorrélation (14) et si l'on calcule les coefficients par intégration des corrections des coefficients pendant un intervalle $[q_1]$ où l'écho procuré par le signal émis est reçu, les valeurs calculées de ces coefficients peuvent être écrites de façon simplifiée, à un facteur constant près :

$$\vec{C}_1(q) = \sum_{[q_1]}^{n} \varepsilon_{R1}(n).\vec{D^*}(n)$$

soit, en utilisant la formule (27) :

$$\vec{C}_1(q) = \vec{k} + \overline{\overline{E}}(n).\vec{k^*} \tag{28}$$

où $\overline{\overline{E}}(n)$ est une matrice carrée d'ordre N, telle que :

$$\overline{\overline{E}}(n) = \sum_{n=0}^{L-1} \underset{\rightarrow}{\vec{D^*}}(n).D^*(n)$$

Pour qu'à l'issue d'un seul intervalle $[q_1]$ d'intégration, on obtienne pour les coefficients $\vec{C}_1(q)$ du filtre transversal, les échantillons $\vec{k}$ de la réponse impulsionnelle du trajet d'écho, il est nécessaire que la matrice $\overline{\overline{E}}(n)$ soit nulle, ce qui peut s'obtenir avec un signal d'apprentissage D(n) devant répondre non seulement à la condition (14) soit :

$$\sum_{n=0}^{L-1} d(n).d^*(n-i) = 0 \qquad \text{pour } i \neq 0$$
$$i = 1,2,..., N-1$$

mais aussi à la condition :

$$\sum_{n=0}^{L-1} d^*(n) . d^*(n-i) = 0 \qquad \text{pour } i = 0,1,2,..., N-1$$

Pour éviter cette nouvelle condition à imposer au signal d'apprentissage $D(n)$, on émet, selon une variante avantageuse du procédé de l'invention, un autre signal d'apprentissage $D_-(n)$, pendant un deuxième intervalle de temps, tel que l'écho procuré par le premier signal $D(n)$ a disparu. Ce signal $D_-(n)$ est tel que :

$$D_+(n) = jD(n)$$

Ce signal émis procure un signal d'écho $\varepsilon_{R2}(n)$ tel que :

$$\vec{\varepsilon}_{R2} = D_+(n).\vec{k} + D^*_+(n).\vec{k}^*$$

Si, sur la base du signal $D_-(n)$ et pendant un intervalle de temps $[q_2]$, on calcule les coefficients du filtre transversal, ce calcul peut s'écrire :

$$\vec{C}_2(q) = \sum_{[q_2]}^{n} \varepsilon_{R2}(n).\vec{D}^*_+(n)$$

En tenant compte de l'expression ci-dessus $\varepsilon_{R2}(n)$, on en déduit :

$$\vec{C}_2(q) = \vec{k} + \overline{\overline{F}}(n)\vec{k}^* \qquad (29)$$

où $\overline{\overline{F}}(n)$ est une matrice carrée d'ordre N, telle que :

$$\overline{\overline{F}}(n) = \sum_{n=0}^{L-1} \vec{D}^*_+(n).\vec{D}^*_+(n)$$

Puisque $D_-(n) = jD(n)$, on a $\overline{\overline{F}}(n) = -\overline{\overline{E}}(n)$.

Il en résulte, d'après les formules (28) et (29), qu'en formant la somme des coefficients $C_1(q)$ et $C_2(q)$ calculés respectivement par intégration pendant les intervalles de temps $[q_1]$ et $[q_2]$, on obtient à un facteur constant près, les coefficients désirés, soient :

$$\vec{C}(q) = \vec{C}_1(q) + \vec{C}_2(q) = \vec{k}$$

## Revendications

1. Procédé destiné à réduire le temps de convergence d'un annuleur d'écho faisant partie d'un système comprenant au moins deux équipements émetteurs-récepteur dont un est dit équipement local et l'autre équipement distant, cet annuleur d'écho qui est connecté dans un équipement émetteur-récepteur entre deux voies unidirectionnelles émission et réception couplées à une voie bidirectionnelle et qui est utilisé pour annuler un signal d'écho se produisant dans la voie réception en réponse à un signal fourni à la voie émission, comprenant un filtre transversal à N coefficients réglables traitant un signal déduit du signal fourni à la voie émission et un circuit de différence pour former un signal de différence entre deux signaux formés respectivement à partir du signal dans la voie réception et du signal de sortie du filtre transversal, ce procédé étant basé :

— sur l'émission dans l'équipement local d'un signal de données d'apprentissage $D(n)$ formé de données émises à des instants $nT$, se reproduisant périodiquement après une durée $LT$ au moins égale à $NT$ et répondant à la propriété P1 :

$$\sum_{n=0}^{L-1} d(n).d^*[(n-i)\,\text{modulo}\,L] = 0 \quad \text{pour } i \neq 0 \text{ et } 1 \leqslant i \leqslant N-1$$

ou à la propriété P2 :

$$\sum_{n=0}^{L-1} d(n).d^*[(n-i)\text{modulo } L] = -1 \quad \text{pour } i \neq 0 \text{ et } 1 \leq i \leq N-1$$

d et $d^*$ étant respectivement la valeur d'une donnée du signal $D(n)$ et sa valeur conjuguée,
— sur le calcul des coefficients du filtre transversal est effectué après l'instant d'apparition du signal d'écho engendré par ledit signal d'apprentissage, selon l'expression :

$$\vec{C} = \vec{C_0} + \frac{1}{L\sigma^2} \sum_{n=0}^{L-1} e(n).\vec{D}^*(n)$$

$\vec{C_0}$ et $\vec{C}$ étant respectivement les vecteurs des N coefficients du filtre transversal au début et à la fin de la durée de calcul des coefficients,
$e(n)$ étant le signal de différence,
$D^*$ étant le vecteur des valeurs conjuguées des N données emmagasinées dans le filtre transversal,
$\sigma^2$ étant un terme constant, représentatif de la puissance de chaque donnée émise,
caractérisé en ce qu'il est basé en outre sur l'émission quasi simultanée avec le signal de données d'apprentissage $D(n)$ dans l'équipement distant d'un signal de données d'apprentissage $G(n)$, le signal $G(n)$ répondant à la même propriété que le signal $D(n)$, en ce que les signaux $D(n)$ et $G(n)$ répondent en outre à la propriété P1' pour un signal de données répondant à la propriété P1 :

$$\sum_{n=0}^{L-1} d^*[(n-i)\text{modulo } L].g[(n-i')\text{modulo } L] = 0$$

ou à la propriété P2' pour un signal de données répondant à la propriété P2 :

$$\sum_{n=0}^{L-1} d^*[(n-i)\text{modulo } L].g[(n-i')\text{modulo } L] = -1$$

pour i et i' tels que $0 \leq i \leq N-1$, $0 \leq i' \leq N-1$
g étant la valeur d'une donnée du signal $G(n)$, tandis que le calcul des coefficients C' du filtre transversal disposé au niveau de l'équipement distant est effectué après l'instant d'apparition du signal d'écho engendré par ledit signal d'apprentissage selon l'expression :

$$\vec{C}' = \vec{C}'_0 + \frac{1}{L\sigma^2} \sum_{n=0}^{L-1} e'(n).\vec{G}^*(n)$$

où $C'_0$ est le coefficient du filtre transversal de l'équipement distant au début du calcul
et $e'(n)$ est le signal de différence mesurée au niveau de ce même équipement distant.

2. Procédé selon la revendication 1, caractérisé en ce que les coefficients du filtre transversal sont maintenus à zéro pendant la durée de calcul de ces coefficients de sorte que, dans l'expression de calcul des coefficients, $\vec{C_0} = 0$ et/ou $\vec{C'_0} = 0$ on peut substituer le signal reçu $\varepsilon(n)$ au signal de différence $e(n)$ et $\varepsilon'(n)$ au signal de différence $e'(n)$.

3. Procédé selon l'une des revendications 1 à 2, utilisé dans un annuleur d'écho dans lequel les signaux de différence $e(n)$ et $e'(n)$ sont des signaux complexes résultant de la différence entre deux signaux complexes déduits l'un du signal reçu et l'autre du signal de sortie du filtre transversal, caractérisé en ce que les coefficients $\vec{C}$ et $\vec{C'}$ du filtre transversal sont calculés en émettant un seul signal d'apprentissage $D(n)$ et $G(n)$.

4. Procédé selon l'une des revendications 1 à 4, utilisé dans un équipement émetteur-récepteur local recevant, outre un signal de données d'apprentissage, un signal de bruit engendré par l'émission de la part de l'équipement émetteur-récepteur distant d'un signal de données quelconque, caractérisé en ce que les coefficients sont calculés pendant une durée LT choisie de telle sorte que substantiellement $R = L/N$, R étant le rapport souhaité entre la puissance du signal d'écho résiduel et la puissance du signal de bruit.

**Claims**

1. A method of reducing the convergence time of an echo canceller forming art of a system comprising at least two transceiver arrangements, one of which being a local arrangement and the other a remote arrangement, this echo canceller connected in a transceiver arrangement between two one-way transmit and receive paths coupled to a two-way path and being used to cancel an echo signal occurring in the receive path in response to a signal supplied to the transmit path, this echo canceller comprising a transversal filter having N controllable coefficients for processing a signal derived from the signal supplied to the transmit path and a difference circuit for producing a difference signal between two signals which are formed from the signal in the receiver path and the output signal of the transversal filter respectively, which method is based on :

— the transmission in the local arrangement of a training data signal D(n) which is constituted by data transmitted at instants nT, which is periodically reproduced after a duration LT at least equal to NT and which satisfies the property P1 :

$$\sum_{n=0}^{L-1} d(n).d^*[(n-i) \text{modulo } L] = 0 \quad \text{for } i \neq 0 \text{ and } 1 \leq i \leq N-1$$

or the property P2 :

$$\sum_{n=0}^{L-1} d(n).d^*[(n-i) \text{modulo } L] = -1 \quad \text{for } i \neq 0 \text{ and } 1 \leq i \leq N-1$$

where d and d* are the value of a datum of the data signal D(n) and its complex conjugate value respectively ; and

— the calculation of the coefficients of the transversal filter carried out after the instant of appearance of the echo signal produced in response to said training signal in accordance with the expression :

$$\vec{C} = \vec{C}_0 + \frac{1}{L\sigma^2} \sum_{n=0}^{L-1} e(n).\vec{D}^*(n)$$

where $\vec{C}_0$ and $\vec{C}'$ are the vectors of the N coefficients of the transversal filter at the beginning and at the end of the period of calculating the coefficients respectively,

e(n) is the difference signal,

$\vec{D}^*(n)$ is the vector of the complex conjugate values of the N data stored in the transversal filter, and

$\sigma^2$ is a constant term representative of the power of each of the transmitted data,

characterized in that it is further based on the quasi-simultaneous transmission with the training data signal D(n) of a training data signal G(n) in the remote arrangement, where the signal G(n) satisfies the same property as signal D(n), in that the signals D(n) and G(n) further satisfy the property P1' for a data signal which satisfies the property P1 :

$$\sum_{n=0}^{L-1} d^*[(n-i) \text{modulo } L].g[(n-i') \text{modulo } L] = 0$$

or the property P2' for a data signal which satisfies the property P2 :

$$\sum_{n=0}^{L-1} d^*[(n-i) \text{modulo } L].g[(n-i') \text{modulo } L] = -1$$

for i and i' so that $0 \leq i \leq N-1$, $0 \leq i' \leq N-1$

wherein g is the value of a datum of the signal G(n), and the calculation of the vector C' of the coefficients of the transversal filter in the remote arrangement carried out after the instant of appearance of said training signal in accordance with the expression :

$$\vec{C}' = \vec{C}'_0 + \frac{1}{L\sigma^2} \sum_{n=0}^{L-1} e'(n).\vec{G}^*(n)$$

where $C'_0$ is the coefficient vector of the transversal filter of the remote arrangement at the beginning of the calculation, and

e'(n) is the difference signal measure in the same remote arrangement.

2. The method as claimed in one of the Claims 1 or 2, wherein the coefficients of the transversal filter

17

are maintained at zero during the period of calculating said coefficients, whereby in the expression for calculating the coefficients, $\vec{C}_0 = 0$ and/or $\vec{C}'_0 = 0$, and there received signal $\varepsilon(n)$ can be substituted for the difference signal $e(n)$ and $\varepsilon'(n)$ for the difference signal $e'(n)$.

3. A method as claimed in one of the Claims 1 and 2 and used in an echo canceller in which the difference signals $e(n)$ and $e'(n)$ are complex signals resulting from the difference between two complex signals, one derived from the received signal and the other from the output signal of the transversal filter, characterized in that the coefficient vectors $\vec{C}$ and $\vec{C}'$ of the transversal filter are calculated while transmitting a single training signal $D(n)$ and $G(n)$.

4. A method as claimed in one of the Claims 1 to 5 and used in a local transceiver arrangement receiving, apart from a training data signal, a noise signal produced in response to the transmission of an arbitrary data signal by the distant transceiver arrangement, characterized in that the coefficients are calculated during a period LT chosen so that L/N is substantially equal to R, where R is the desired ratio between the power of the residual echo signal and the power of the noise signal.

**Patentansprüche**

1. Verfahren zur Verkürzung der Konvergenzzeit eines Echokompensators, der einen Teil eines Systems bildet, das mindestens zwei Sender-Empfängersätze aufweist, von denen der eine Satz als Ortssatz und der andere Satz als Fernsatz bezeichnet wird, wobei dieser Echokompensator, der in einem Sender-Empfängersatz zwischen zwei zu einer Zweirichtungen-Strecke gekoppelten Einrichtungssende- und -empfangsstrecken geschaltet ist und zum Kompensieren eines Echosignals verwendet wird, das als Antwort auf ein der Sendestrecke zugeführtes Signal in der Empfangsstrecke entsteht, mit einem Transversalfilter mit N regelbaren Koeffizienten, das ein Signal behandelt, das von einem der Sendestrecke zugeführten Signal abgeleitet ist, und mit einer Differenzschaltung zum Bilden eines Differenzsignals zwischen zwei Signalen, die aus dem Signal in der Empfangsstrecke und dem Ausgangssignal des Transversalfilters gebildet werden, wobei dieses Verfahren ausgeht von :
— dem Ausstrahlung in dem Ortssatz eines Lehrdatensignals D(n), dans aus Daten gebildet wird, die zu den Zeitpunkten nT ausgesendet werden, wobei dieses Signal periodisch nach einer Dauer LT wenigstens entsprechend NT auftritt und der folgenden Eingenschaft P1 entspricht :

$$\sum_{n=0}^{L-1} d(n).d^*[(n-i)modulo\ L] = 0 \quad für\ i \neq 0\ und\ 1 \leq i \leq N-1$$

oder der Eigenschaft P2 entspricht :

$$\sum_{n=0}^{L-1} d(n).d^*[(n-i)modulo\ L] = -1 \quad für\ i \neq 0\ und\ 1 \leq i \leq N-1$$

wobei d und d* der Wert eines Datums des Signals D(n) bzw. des zugeordneten Wertes ist,
— auf der Berechnung der Koeffizienten des Transversalfilters, wobei diese Berechnung nach dem Auftrittszeitpunkt des Echosignals erfolgt, das durch das Lehrsignal entsprechend dem folgenden Ausdruck erzeugt wird :

$$\vec{C} = \vec{C}_0 + \frac{1}{L\sigma^2} \sum_{n=0}^{L-1} e(n).\vec{D^*}(n)$$

wobei $\vec{C}_0$ und $\vec{C}$ die Vektoren der N Koeffizienten des Transversalfilters am Anfang bzw. am Ende der Berechnungsdauer der Koeffizienten sind,
wobei e(n) das Differenzsignal ist,
wobei D* der Vektor der zugeordneten Werte der N in dem Transversalfilter gespeicherten Daten ist,
wobei $\sigma$ ein konstanter Term ist, der für die Leistung jedes ausgestrahlten Datums repräsentativ ist,
dadurch gekennzeichnet, dass das Verfahren ausserdem ausgeht von der quasi-simultanen Ausstrahlung mit dem Lehrdatensignal $\overline{D}(n)$ in dem Fernsatz eines Lehrdatensignals G(n), wobei dieses Signal G(n) derselben Eigenschaft wie das Signal $\overline{D}(n)$ entspricht, dass die Signale $\overline{D}(n)$ und G(n) ausserdem der Eigenschaft P1' für ein Datensignal ensprechend der Eigenschaft P1 entsprechen :

$$\sum_{n=0}^{L-1} d^*[(n-i)modulo\ L].g[(n-i')modulo\ L] = 0$$

oder der Eigenschaft P2' für ein Datensignal, das der Eigenschaft P2 entspricht :

18

$$\sum_{n=0}^{L-1} d^{x}[(n-i)\text{modulo } L].g[(n-i')\text{modulo } L] = -1$$

für i und i' derart, dass $0 \leq i \leq N - 1$, $0 \leq i' \leq N - 1$
wobei g der Wert eines Datums des Signals G(n) ist, während, die Berechnung der Koeffizienten C' des Transversalfilters auf dem Pegel des Fernsatzes nach dem Auftrittszeitpunkt des Echosignals durchgeführt wird, das von dem genannten Lehrsignals entsprechend dem folgenden Ausdruck erzeugt wird :

$$\vec{C}' = \vec{C}'_0 + \frac{1}{L\sigma^2} \sum_{n=0}^{L-1} e'(n).\vec{G}^{x}(n)$$

wobei C'0 der Koeffizient des Transversalfilters des Fernsatzes am Ende der Berechnung ist und wobei e'(n) das Differenzsignal, gemessen auf dem Pegel dieses Fernsatzes, ist.

2. Verfahren nach Anspruch 1, dadurch gekennzeichnet, dass die Koeffizienten des Transversalfilters während der Berechnungsdauer der Koeffizienten derart auf Null gehalten werden, dass in dem Berechnungsausdruck der Koeffizienten, in dem $\vec{C}0 = 0$ ist und/oder $\vec{C}'_0 = 0$ ist, das erhaltene Signal $\varepsilon(n)$ durch das Differenzsignal e(n) und das Signal $\varepsilon'(n)$ durch das Differenzsignal e'(n) ersetzt werden kann.

3. Verfahren nach einem der Ansprüche 1 oder 2, das in einem Echokompensator angewandt wird, in dem die Differenzsignale e(n) und e'(n) Signalgefüge sind, die resultieren aus der Differenz zwischen zwei Signalgefügen, von denen das eine von dem erhaltenen Signal und das andere von dem Ausgangssignal des Transversalfilters abgeleitet ist; dadurch gekennzeichnet, dass die Koeffizienten $\vec{C}$ und $\vec{C}'$ des Transversalfilters dadurch berechnet werden, dass ein einziges Lehrsignal D(n) und G(n) ausgestrahlt wird.

4. Verfahren nach einem der Ansprüche 1 bis 4, das in einem Orts-Sender-Empfängersatz angewandt wird, der ausser einem Lehrdatensignal ein Rauschsignal erhält, das durch Ausstrahlung eines beliebigen Datensignals seitens des Fern-Sender-Empfängersatzes erzeugt wird, dadurch gekennzeichnet, dass die Koeffizienten während einer Dauer LT berechnet werden, die derart gewählt ist, dass im wesentlichen gilt : R = L/N, wobei R das Verhältnis zwischen der Restechosignalstärke und der Rauschsignalstärke ist.

FIG.1

FIG.2

EP 0 096 936 B1

FIG.3

FIG.4

2

FIG.5

EP 0 096 936 B1